# EUROPÄISCHE PATENTSCHRIFT

(11) **EP 3 555 717 B1**
(45) Veröffentlichungstag und Bekanntmachung des Hinweises auf die Patenterteilung: **30.12.2020**
(21) Anmeldenummer: 17801711.7
(22) Anmeldetag: 22.11.2017
(51) Int. Cl.: G05B 19/418

(54) **BEDIENEINHEIT FÜR EIN FELDGERÄT DER AUTOMATISIERUNGSTECHNIK**
OPERATOR CONTROL UNIT FOR A FIELD DEVICE USED IN AUTOMATION TECHNOLOGY
UNITÉ D'EXPLOITATION POUR APPAREIL DE TERRAIN DE LA TECHNOLOGIE D'AUTOMATISATION

(30) Priorität: 19.12.2016 DE 102016124739
(43) Veröffentlichungstag der Anmeldung: 23.10.2019
(73) Patentinhaber: Endress+Hauser Process Solutions AG, 4153 Reinach (CH)
(72) Erfinder: SOTRIFFER, Ingomar, 79194 Gundelfingen (DE); DE GROOT, Vincent, 68300 St. Louis (FR)
(74) Vertreter: Andres, Angelika Maria
(86) Internationale Anmeldenummer: PCT/EP2017/080044
(87) Internationale Veröffentlichungsnummer: WO 2018/114183

(56) Entgegenhaltungen:
- WO-A2-2008/012738
- DE-A1-102007 035 158
- US-A- 5 892 939

## Beschreibung

Die Erfindung betrifft eine Bedieneinheit für ein Feldgerät der Automatisierungstechnik.

Aus dem Stand der Technik sind bereits Feldgeräte bekannt geworden, die in industriellen Anlagen zum Einsatz kommen. In der Prozessautomatisierung ebenso wie in der Fertigungsautomatisierung werden vielfach Feldgeräte eingesetzt. Als Feldgeräte werden im Prinzip alle Geräte bezeichnet, die prozessnah eingesetzt werden und die prozessrelevante Informationen liefern oder verarbeiten. So werden Feldgeräte zur Erfassung und/oder Beeinflussung von Prozessgrößen verwendet. Zur Erfassung von Prozessgrößen dienen Messgeräte, bzw. Sensoren. Diese werden beispielsweise zur Druck- und Temperaturmessung, Leitfähigkeitsmessung, Durchflussmessung, pH-Messung, Füllstandmessung, etc. verwendet und erfassen die entsprechenden Prozessvariablen Druck, Temperatur, Leitfähigkeit, pH-Wert, Füllstand, Durchfluss etc. Zur Beeinflussung von Prozessgrößen werden Aktoren verwendet. Diese sind beispielsweise Pumpen oder Ventile, die den Durchfluss einer Flüssigkeit in einem Rohr oder den Füllstand in einem Behälter beeinflussen können. Neben den zuvor genannten Messgeräten und Aktoren werden unter Feldgeräten auch Remote I/Os, Funkadapter bzw. allgemein Geräte verstanden, die auf der Feldebene angeordnet sind.

Eine Vielzahl solcher Feldgeräte wird von der Endress+Hauser-Gruppe produziert und vertrieben.

In modernen Industrieanlagen sind Feldgeräte in der Regel über Kommunikationsnetzwerke wie beispielsweise Feldbusse (Profibus®, FOUNDATION® Fieldbus, HART®, etc.) mit übergeordneten Einheiten verbunden. Bei den übergeordneten Einheiten handelt es sich um Steuereinheiten, wie beispielsweise eine SPS (speicherprogrammierbare Steuerung) oder einen PLC (Programmable Logic Controller). Die übergeordneten Einheiten dienen unter anderem zur Prozesssteuerung, sowie zur Inbetriebnahme der Feldgeräte. Die von den Feldgeräten, insbesondere von Sensoren, erfassten Messwerte werden über das jeweilige Bussystem an eine (oder gegebenenfalls mehrere) übergeordnete Einheit(en) übermittelt, die die Messwerte gegebenenfalls weiterverarbeiten und an den Leitstand der Anlage weiterleiten. Der Leitstand dient zur Prozessvisualisierung, Prozessüberwachung und Prozessteuerung über die übergeordneten Einheiten. Daneben ist auch eine Datenübertragung von der übergeordneten Einheit über das Bussystem an die Feldgeräte erforderlich, insbesondere zur Konfiguration und Parametrierung von Feldgeräten sowie zur Ansteuerung von Aktoren.

Zur Bedienung der Feldgeräte sind entsprechende Bedienprogramme (Bedientools) notwendig, die auf den übergeordneten Einheiten entweder eigenständig ablaufen (Endress+Hauser FieldCare, Pactware, AMS Fisher-Rosemount, PDM Siemens) oder aber auch in Anwendungen des Leitstands (Siemens PCS7, ABB Symphony, Emerson Delta V) integriert sind. Unter dem Begriff "Bedienen" wird unter anderem ein Parametrieren des Feldgeräts, ein Updaten des Feldgeräts und/oder ein Abfragen und Visualisieren von Prozessdaten und/oder Diagnosedaten des Feldgeräts verstanden.

Die Integration von Feldgeräten in solche Bedienprogramme erfolgt über Gerätetreiber, beziehungsweise über Gerätebeschreibungen. Diese werden von den Geräteherstellern bereitgestellt, damit die übergeordneten Einheiten, beziehungsweise die auf diesen übergeordneten Einheiten ablaufenden Bedienprogramme, die Bedeutung der von den Feldgeräten gelieferten Informationen erkennen und interpretieren können.

In Zusammenarbeit der Fieldbus Foundation , der HART Communication Foundation und der Profibus Nutzerorganisation wurde eine elektronische Gerätebeschreibung (Electronic Device Description Language EDDL) geschaffen, die in der Norm IEC 61804 definiert ist.

Für eine vollumfängliche Bedienung der Feldgeräte sind spezielle Gerätetreiber, so genannte DTMs (Device Type Manager), die den FDT (Field Device Tool) Spezifikationen entsprechen, erhältlich. Die in der Norm IEC 62453 standardisierten FDT-Spezifikationen wurden von der PNO (Profibus Nutzer Organisation) in Zusammenarbeit mit dem ZVEI (Zentralverband Elektrotechnik- und Elektroindustrie) entwickelt.

Viele Feldgerätehersteller liefern für ihre Feldgeräte entsprechende DTMs aus. Die DTMs kapseln alle Variablen und Funktionen des jeweiligen Feldgeräts und bieten meist eine graphische Nutzeroberfläche zum Bedienen der Geräte an.

Neben den übergeordneten Einheiten werden zur Bedienung der Feldgeräte häufig Bedieneinheiten eingesetzt. Diese Bedieneinheiten sind entweder Laptops oder mobile Bedieneinheiten und werden zur Kommunikation mit den Feldgeräten mit dem Feldbusnetzwerk verbunden. Ein Beispiel für ein solches mobiles Gerät ist der "Field Xpert", welcher von der Anmelderin produziert und vertrieben wird. Auch hierfür werden entsprechende Gerätetreiber oder Gerätebeschreibungen benötigt.

Feldgeräte sind häufig mit zusätzlichen Kommunikationsschnittstellen ausgestattet, über welche die Feldgeräte mittels eines zusätzlichen, von dem Feldbusnetzwerk unabhängigen, Kommunikationskanals per Bedieneinheit bedient werden können. Häufig handelt es sich hierbei um spezielle Serviceschnittstellen, beispielsweise die von in Feldgeräten der Anmelderin implementierte CDI-Schnittstelle oder um USB-Schnittstellen. Neben solchen kabelgebundenen Verbindungsmöglichkeiten steigt mittlerweile die Anzahl der auf dem Markt verfügbaren Feldgeräte, welche für die Bedienzwecke eine Funkschnittstelle aufweisen. Häufig ist diese Funkschnittstelle als Bluetooth-Funkschnittstelle ausgestaltet.

Die aktuellen Trends aus der Mobiltelefon- und Smartphonebranche greifen ebenfalls auf den Feldgerätemarkt über. So bieten heutzutage bereits mehrere Hersteller von Feldgeräten spezielle Programme, sogenannte Applikationssoftware, kurz Apps, für Smartphones und anderen mobilen Endgeräten wie Tablets und Uhren an, welche ein Bedienen von Feldgeräten mittels eines solchen Smartphones über die obig aufgeführte Funkschnittstelle eines Feldgeräts ermöglicht. Diese Applikationssoftwares bieten häufig den Vorteil, dass sie im Gegensatz zu den herkömmlichen Bedienmethoden intuitiv verständlich sind und einem Anwender erlauben, die meisten Basisbedienungen und/oder Wartungsfunktionen eines Feldgeräts auf einfache Art und Weise vorzunehmen.

Jedoch existiert bis dato kein Standard für derartige Applikationssoftware, so dass jeder Hersteller von Feldgeräten ein eigenes Konzept anbietet und häufig jeder einzelne Feldgerätetyp eine separate Applikationssoftware benötigt. Zudem wird für viele Feldgeräte noch gar keine App angeboten, weswegen die Bedienung dieser Feldgeräte auf herkömmliche Art und Weise mittels Treibern oder Gerätebeschreibungen (DTM- oder EDDL-basiert) erfolgen muss. Ein Servicetechniker muss hierfür zusätzlich zu den die Applikationssoftware ausführenden Smartphones eine Rechnereinheit mitführen, um alle Feldgeräte in einer Anlage vollumfassend bedienen, bzw. warten zu können. Selbst wenn die vom Servicetechniker zu bedienenden Feldgeräte per Smartphone bedienbar sind, benötigt der Servicetechniker dennoch häufig eine separate Rechnereinheit, um beispielsweise seine Aktivitäten zu protokollieren, bzw. um über die Rechnereinheit Instruktionen zu erlangen, welche Interaktionen mit welchen Feldgeräten durchgeführt werden können.

Aus der DE 10 2007 035158 A1 ist eine Bedieneinheit für ein Feldgerät bekannt geworden, welches ein Bedienprogramm mit einem darauf ausführbaren Anwendungsprogramm aufweist.

Die WO 2008/012738 A2 offenbart einen Emulator, der es ermöglicht, eine auf einem zweiten Betriebssystem ausführbare Applikationssoftware auf einem Host-Rechner auszuführen, der mit einem ersten Betriebssystem betrieben wird.

Die US 5 892 939 A beschreibt die Emulation von Komponenten, unter anderem einer Bedieneinheit, in einem Automatisierungssystem, um Funktionalitäten von nicht-nativer Software in einer nativen Umgebung zur Verfügung zu stellen.

Ausgehend von dieser Problematik liegt der Erfindung die Aufgabe zugrunde, eine Bedieneinheit vorzustellen, welche das Bedienen und Warten von Feldgeräten vereinfacht.

Die Aufgabe wird durch eine Bedieneinheit für ein Feldgerät der Automatisierungstechnik, mit einem ersten Betriebssystem, gelöst, welche Bedieneinheit umfasst:
- ein auf dem ersten Betriebssystem der Bedieneinheit ausführbares Anwendungsprogramm; und
- einen Emulationsalgorithmus, welcher dazu ausgestaltet ist, eine auf einem zweiten Betriebssystem ausführbare Applikationssoftware, welche zumindest ein Kommunikationsprotokoll zum Kodieren/Dekodieren von zum/vom Feldgerät übermittelten Telegrammen aufweist und welche dazu ausgestaltet ist, das Feldgerät zu bedienen, insbesondere Parameter des Feldgeräts zu lesen, anzuzeigen und zu verändern und/oder Messwerte des Feldgeräts zu lesen und anzuzeigen, auf dem Anwendungsprogramm der Bedieneinheit auszuführen.

Der große Vorteil der erfindungsgemäßen Bedieneinheit besteht darin, dass Applikationssoftware, welche unter normalen Umständen nicht auf dem ersten Betriebssystem der Bedieneinheit lauffähig ist, von diesem ausgeführt werden kann.

Der Emulationsalgorithmus gibt der Ausführungsapplikation vor, dass sich diese von ihrem zum Betreib benötigten zweiten Betriebssystem befindet und konvertiert alle benötigten Ressourcen und Schnittstellen des ersten Betriebssystems derart, dass die Anwendungsapplikation diese für Ressourcen und Schnittstellen des zweiten Betriebssystems hält.

Über das Anwendungsprogramm, welches auf dem ersten Betriebssystem ausgeführt wird, erhält die Applikationssoftware Zugriff auf Schnittstellen der Bedieneinheit, insbesondere auf hardwareseitige Kommunikationsschnittstellen, um eine Verbindung mit dem Feldgerät herzustellen. Die nötigen Informationen, um das Feldgerät "verstehen" zu können, also insbesondere die Befehls- und Registerindizes des Feldgeräts, sind in der Applikationssoftware enthalten. Auch die Kodier-/Dekodierinformationen, um über die Schnittstelle gesendete/empfangene Telegramme erstellen/interpretieren zu können, sind in der Applikationssoftware enthalten. Das Anwendungsprogramm selbst benötigt daher keine eigenen Informationen bezüglich des zu bedienenden Feldgeräts.

Ein Anwender, beispielsweise ein Servicetechniker, benötigt somit nunmehr lediglich ein Gerät, nämlich die erfindungsgemäße Bedieneinheit. Ein zweites Gerät, welches normalerweise zur Ausführung der Applikationssoftware benötigt werden würde, muss von dem Anwender nicht mehr mitgeführt werden. Dies spielt insbesondere dann eine Rolle, wenn das Feldgerät im Ex-Bereich eingesetzt wird, für welchen spezielle Sicherheits- und Zugangsanforderungen bestehen. Auch müsste kein Datenabgleich zwischen den beiden Geräten erfolgen. Einem Bediener wird dadurch das Bedienen, bzw. das Warten von Feldgeräten erheblich erleichtert.

Feldgeräte, welche im Zusammenhang mit der erfindungsgemäßen Bedieneinheit genannt werden, sind bereits im einleitenden Teil der Beschreibung beispielhaft aufgeführt.

Gemäß einer ersten Variante weist die erfindungsgemäße Bedieneinheit einen in dem Anwendungsprogramm ausführbaren generischen Kommunikationstreiber weist, welcher ausgestaltet ist, den Emulationsalgorithmus auszuführen. Der Vorteil bei dieser Variante ist, dass das Anwendungsprogramm selbst nicht verändert werden muss, um die Ausführungsapplikation auszuführen.

Gemäß einer zweiten Variante der erfindungsgemäßen Bedieneinheit ist vorgesehen, dass das Anwendungsprogramm ausgestaltet ist, den Emulationsalgorithmus auszuführen. In diesem Fall ist der Emulationsalgorithmus beispielsweise im Code des Anwendungsprogramms enthalten.

Gemäß einer ersten Weiterbildung der ersten Variante der erfindungsgemäßen Bedieneinheit ist vorgesehen, dass es sich bei dem Anwendungsprogramm um eine FDT-Anwendungsapplikation handelt.

In einer Ausgestaltung der ersten Weiterbildung der erfindungsgemäßen Bedieneinheit ist vorgesehen, dass wobei es sich bei dem generischen Kommunikationstreiber um einen DTM-Gerätetreiber handelt.

Gemäß einer zweiten Weiterbildung der ersten Variante der erfindungsgemäßen Bedieneinheit ist vorgesehen, dass es sich bei dem Anwendungsprogramm um einen FDI-Host handelt.

In einer Ausgestaltung der zweiten Weiterbildung der erfindungsgemäßen Bedieneinheit ist vorgesehen, dass es sich bei dem generischen Kommunikationstreiber um ein FDI-Package handelt.

Gemäß einer bevorzugten Ausgestaltung der erfindungsgemäßen Bedieneinheit ist vorgesehen, dass die Bedieneinheit eine Rechnereinheit, insbesondere ein Laptop, eine mobile Bedieneinheit, beispielsweise der von der Anmelderin produzierte und vertriebene "Field Xpert", ein Workstation-PC oder ein Tablet ist.

Ebenso kann ein Smartphone verwendet werden. In diesem Falle kann Applikationssoftware, welche unter Umständen nicht auf dem Betriebssystem des Smartphones ausführbar wäre (beispielsweise iOs-Applikationssoftware auf einem Android-Betriebssystem, oder Applikationssoftware für ein zweites Betriebssystem, welches eine von der Versionsnummer des auf dem Smartphone befindlichen ersten Betriebssystems abweichende Versionsnummer umfasst), dennoch ausgeführt werden. Gemäß einer vorteilhaften Ausgestaltung der erfindungsgemäßen Bedieneinheit ist vorgesehen, dass die Bedieneinheit eine Kommunikationsschnittstelle zur Verbindung der Bedieneinheit mit einem drahtgebundenen oder einem drahtlosen Kommunikationsnetzwerk aufweist, welche für die Applikationssoftware zugreifbar ist. In dem Falle, dass das Kommunikationsnetzwerk drahtgebunden ist, handelt es sich insbesondere um eine Serviceschnittstelle (beispielsweise eine von den Feldgeräten der Anmelderin angebotene CDI-Schnittstelle) oder um eine USB-Schnittstelle. Im Falle, dass das Kommunikationsnetzwerk drahtlos ausgestaltet ist, handelt es sich bei der Kommunikationsschnittstelle insbesondere um eine Bluetooth-, Zigbee-, WirelessHART- oder WLAN-Schnittstelle.

Gemäß einer vorteilhaften Ausgestaltung der erfindungsgemäßen Bedieneinheit handelt es sich bei dem ersten Betriebssystem um Microsoft Windows. Es kann sich aber auch um ein ähnliches Betriebssystem einer Rechnereinheit, beispielsweise OS X oder um Linux handeln. Im Falle einer mobilen Bedieneinheit handelt es sich um ein für diese Bedieneinheit spezifisches Betriebssystem. Im Falle, dass es sich bei der Bedieneinheit um ein Smartphone handelt, ist das Betriebssystem eines der gängigen Smartphone-Betriebssysteme, insbesondere Android, iOs, Windows Phone/Mobile, oder eine Linux-Variante.

Gemäß einer vorteilhaften Ausgestaltung der erfindungsgemäßen Bedieneinheit handelt es sich bei dem zweiten Betriebssystem um ein Betriebssystem eines mobilen Endgeräts, insbesondere um iOS oder um Android. Neben iOs und Android sind dem Fachmann natürlich eine Vielzahl weiterer zweiter Betriebssysteme von Smartphones bekannt, beispielsweise Windows Phone/Mobile und Linux-Varianten.

Des Weiteren wird ein generischer Kommunikationstreiber zur Verwendung in der erfindungsgemäßen Bedieneinheit offenbart. Des Weiteren wird ein Anwendungsprogramm zur Verwendung in der erfindungsgemäßen Bedieneinheit offenbart. Das Anwendungsprogramm ist, je nach

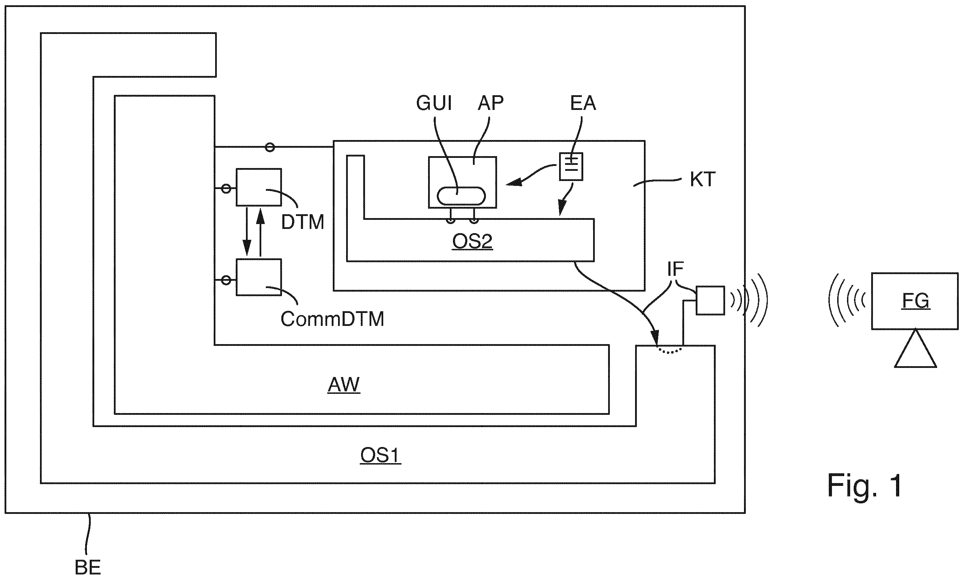

Variante der erfindungsgemäßen Bedieneinheit, dazu ausgestaltet, einen generischen Kommunikationstreiber, welchen den Emulationsalgorithmus beinhaltet/ausführt, auszuführen, oder den Emulationsalgorithmus selbst zu beinhalten/auszuführen. Die Erfindung wird anhand der nachfolgenden Figuren näher erläutert. Es zeigen Fig. 1: einen schematischen Überblick über ein Anwendungsbeispiel der erfindungsgemäßen Bedieneinheit.

Fig. 1 zeigt einen schematischen Überblick über ein Anwendungsbeispiel der erfindungsgemäßen Bedieneinheit BE. In diesem Anwendungsbeispiel ist die Bedieneinheit BE als Laptop ausgestaltet. Auf der Bedieneinheit BE ist Microsoft Windows als erstes Betriebssystem OS1 installiert.

Des Weiteren ist auf der Bedieneinheit BE ein Anwendungsprogramm AW installiert, welches auf dem ersten Betriebssystem OS1 lauffähig ist. Bei dem Anwendungsprogramm AW handelt es sich um eine FDT-Rahmenapplikation, beispielsweise um das Programm "FieldCare", welches von der Anmelderin vertrieben wird. Nähere Informationen zu der FDT-Technologie und zu deren Zweck sind bereits im einleitenden Teil der Beschreibung aufgeführt.

Normalerweise werden in einer FDT-Rahmenapplikation Gerätetreiber in Form von DTMs (Device Type Manager) ausgeführt, um auf ein Feldgerät FG zugreifen und dieses bedienen zu können. Hierfür wird zumeist ein Kommunikationstreiber CommDTM bereitgestellt, welcher die Kommunikation mit dem Feldgerät ermöglicht. Mittels feldgerätespezifischen Gerätetreibern DTM können dann beispielsweise Funktionen des Feldgeräts FG ausgeführt werden, Daten (insbesondere Messdaten und Diagnosedaten) und Parameter aus dem Feldgerät FG ausgelesen werden und das Feldgerät FG parametriert werden.

Wie bereits im einleitenden Teil der Beschreibung erläutert, existieren heutzutage eine Vielzahl an Applikationssoftware AP für Smartphones, mit welchen beispielsweise per Bluetooth auf ein Feldgerät FG zugegriffen werden kann und dieses häufig auf einfache Art und Weise bedient werden kann. Häufig ist die graphische Benutzeroberfläche GUI einer Applikationssoftware AP sehr simpel und übersichtlich aufgebaut und für einen Anwender unter Umständen intuitiver verständlich, als dies für die Benutzeroberfläche eines feldgerätespezifischen Gerätetreibers DTM der Fall wäre.

Eine Applikationssoftware AP ist nur selten mit Betriebssystemen OS1 für Laptops und PCs kompatibel, da die Applikationssoftware AP spezifisch für die Betriebssysteme OS2 der Smartphones, beispielsweise iOs oder Android, programmiert ist.

Um eine solche Applikationssoftware AP auf der Bedieneinheit BE auszuführen, benötigt diese einen speziellen generischen Kommunikationstreiber KT, welche im Anwendungsprogramm AW gestartet und ausgeführt wird. Dieser generische Kommunikationstreiber KT beinhaltet einen Emulationsalgorithmus EA und erlaubt den Zugriff auf eine Datenbank, auf welcher eine Vielzahl unterschiedlicher Applikationssoftware AP verfügbar ist und auf welche die Bedieneinheit BE über das Internet zugreifen kann. Die Datenbank ist vergleichbar mit einem sogenannten, per Smartphone oder Tablet kontaktierbaren, "App-Store".

Ein Anwender wählt eine oder mehrere der auf der Datenbank verfügbaren Applikationssoftwares AP aus, woraufhin diese über das Internet auf die Bedieneinheit BE geladen und auf dieser gespeichert werden. Mittels des Emulationsalgorithmus EA wird der Applikationssoftware AP simuliert, dass diese auf einem zweiten Betriebssystem OS2, also einem Betriebssystems eines Smartphones ausgeführt wird. Der Emulationsalgorithmus EA konvertiert alle benötigten Ressourcen und Schnittstellen des ersten Betriebssystems OS1 derart, dass die Anwendungsapplikation AP diese für Ressourcen und Schnittstellen des zweiten Betriebssystems OS2 hält.

Dem Anwender wird hierbei die grafische Benutzeroberfläche GUI der Applikationssoftware AP visualisiert. Der Anwender kann die Applikationssoftware analog zu der eigentlich vorgesehen Bedienung mittels eines Smartphones über auf der graphischen Benutzeroberfläche GUI angezeigte Bedienelemente bedienen, beispielsweise per Mausklick auf eine dieser Bedienelemente und/oder Eingabe von Zahlenwerten, bzw. Buchstabenfolgen über ein Eingabegerät, beispielsweise eine Tastatur.

Über das Anwendungsprogramm AW erhält die Applikationssoftware AP Zugriff auf eine Bluetooth-Kommunikationsschnittstelle IF der Bedieneinheit BE und kann sich mittels Bluetooth mit dem Feldgerät FG verbinden. Die benötigen Informationen, um das Feldgerät FG "verstehen" zu können, also insbesondere die Befehls- und Registerindizes des Feldgeräts FG, sind in der Applikationssoftware AW enthalten.

Auch die Kodier-/Dekodierinformationen, um über die Bluetoothschnittstelle an das Feldgerät FG gesendete, bzw. von dem Feldgerät FG empfangene Telegramme erstellen/interpretieren zu können, sind in der Applikationssoftware AP enthalten. Das Anwendungsprogramm AW selbst benötigt daher keine eigenen Informationen bezüglich des zu bedienenden Feldgeräts FG.

Ein Anwender AW kann auf diese Art und Weise mehrere Arten der Applikationssoftware AP auf der Bedieneinheit BE speichern und ausführen, um Feldgeräte FG komfortabel mittels der Applikationssoftware AP zu bedienen.

Alternativ zu der Verwendung eines generischen Kommunikationstreibers KT weist das Anwendungsprogramm selbst die zum Ausführen einer Applikationssoftware AP benötigte Komponenten, also den Emulationsalgorithmus EA und die Funktion zum Zugriff auf die Datenbank, auf. Es kann hierfür vorgesehen sein, dass besagte Komponenten im Code des Anwendungsprogramms AW enthalten sind.

Es versteht sich von selbst, dass die gezeigten Ausführungsbeispiele ausschließlich beispielhafter Natur sind und die Erfindung auf beliebige Kombinationen von Bedieneinheiten BE, erstem und zweitem Betriebssystem OS1, OS2 und Anwendungs- und Applikationsprogrammen AW, AP angewendet werden kann.

### Bezugszeichenliste

- AW: Anwendungsprogramm
- AP: Applikationssoftware
- BE: Bedieneinheit
- CommDTM: Kommunikationstreiber
- DTM: Feldgerätespezifischer Gerätetreiber
- EA: Emulationsalgorithmus
- FG: Feldgerät
- GUI: Grafische Benutzeroberfläche
- IF: Kommunikationsschnittstellen
- KT: generischer Kommunikationstreiber
- OS1: erstes Betriebssystem
- OS2: zweites Betriebssystem

## Patentansprüche

1. Bedieneinheit (BE) für ein Feldgerät (FG) der Automatisierungstechnik, mit einem ersten Betriebssystem (OS1), umfassend:
- ein auf dem ersten Betriebssystem (OS1) der Bedieneinheit (BE) ausführbares Anwendungsprogramm (AW); und
- einen Emulationsalgorithmus (EA), welcher dazu ausgestaltet ist, eine auf einem zweiten Betriebssystem (OS2) ausführbare Applikationssoftware (AP), welche zumindest ein Kommunikationsprotokoll zum Kodieren/Dekodieren von zum/vom Feldgerät (FG) übermittelten Telegrammen aufweist und welche dazu ausgestaltet ist, das Feldgerät (FG) zu bedienen, insbesondere Parameter des Feldgeräts (FG) zu lesen, anzuzeigen und zu verändern und/oder Messwerte des Feldgeräts (FG) zu lesen und anzuzeigen, auf dem Anwendungsprogramm (AW) der Bedieneinheit (BE) auszuführen.

2. Bedieneinheit (BE) nach Anspruch 1, wobei die Bedieneinheit (BE) einen in dem Anwendungsprogramm (AW) ausführbaren generischen Kommunikationstreiber (KT) aufweist, welcher ausgestaltet ist, den Emulationsalgorithmus (EA) auszuführen.

3. Bedieneinheit (BE) nach Anspruch 1, wobei das Anwendungsprogramm (AW) ausgestaltet ist, den Emulationsalgorithmus (EA) auszuführen.

4. Bedieneinheit (BE) nach Anspruch 2, wobei es sich bei dem Anwendungsprogramm (AW) um eine FDT-Anwendungsapplikation handelt.

5. Bedieneinheit (BE) nach Anspruch 4, wobei es sich bei dem generischen Kommunikationstreiber (KT) um einen DTM-Gerätetreiber handelt.

6. Bedieneinheit (BE) nach Anspruch 2, wobei es sich bei dem Anwendungsprogramm (AW) um einen FDI-Host handelt.

7. Bedieneinheit (BE) nach Anspruch 6, wobei es sich bei dem generischen Kommunikationstreiber (KT) um ein FDI-Package handelt.

8. Bedieneinheit (BE) nach zumindest einem der vorherigen Ansprüche, wobei die Bedieneinheit (BE) eine Rechnereinheit, insbesondere ein Laptop, ein Workstation-PC oder ein Tablet ist.

9. Bedieneinheit (BE) nach zumindest einem der vorherigen Ansprüche, wobei die Bedieneinheit (BE) eine Kommunikationsschnittstelle (IF) zur Verbindung der Bedieneinheit (BE) mit einem drahtgebundenen oder einem drahtlosen Kommunikationsnetzwerk aufweist, welche für die Applikationssoftware zugreifbar ist.

10. Bedieneinheit (BE) nach zumindest einem der vorherigen Ansprüche, wobei es sich bei dem ersten Betriebssystem (OS1) um Microsoft Windows handelt.

11. Bedieneinheit (BE) nach zumindest einem der vorherigen Ansprüche, wobei es sich bei dem zweiten Betriebssystem (OS2) um ein Betriebssystem eines mobilen Endgeräts, insbesondere um iOS oder um Android, handelt.

## Claims

1. Operating unit (BE) for a field device (FG) used in automation engineering, with a first operating system (OS1), comprising:
- an application program (AW) that can be run on the first operating system (OS1) of the operating unit (BE); and
- an emulation algorithm (EA), which is designed to execute, on the application program (AW) of the operating unit (BE), an application software (AP) which can be run on a second operating system (OS2), said software having at least a communication protocol for coding/decoding telegrams transmitted by/to the field device (FG), and wherein said software is designed to operate the field device (FG), particularly to read, display and modify parameters of the field device (FG) and/or to read and display measured values of the field device (FG).

2. Operating unit (BE) as claimed in Claim 1, wherein the operating unit (BE) has a generic communication driver (KT) that can be executed in the application program (AW), said driver being designed to execute the emulation algorithm (EA).

3. Operating unit (BE) as claimed in Claim 1, wherein the application program (AW) is designed to execute the emulation algorithm (EA).

4. Operating unit (BE) as claimed in Claim 2, wherein the application program (AW) is an FDT application.

5. Operating unit (BE) as claimed in Claim 4, wherein the generic communication driver (KT) is a DTM device driver.

6. Operating unit (BE) as claimed in Claim 2, wherein the application program (AW) is an FDI host.

7. Operating unit (BE) as claimed in Claim 6, wherein the generic communication driver (KT) is an FDI package.

8. Operating unit (BE) as claimed in at least one of the previous claims, wherein the operating unit (BE) is a computer unit, particularly a laptop, a workstation PC or a tablet.

9. Operating unit (BE) as claimed in at least one of the previous claims, wherein the operating unit (BE) comprises a communication interface (IF) to connect the operating unit (BE) to a wired or wireless communication network, said interface being accessible for the application software.

10. Operating unit (BE) as claimed in at least one of the previous claims, wherein the first operating system (OS1) is Microsoft Windows.

11. Operating unit (BE) as claimed in at least one of the previous claims, wherein the second operating system (OS2) is an operating system of a mobile terminal, particularly iOS or Android.

## Revendications

1. Unité de commande (BE) destinée à un appareil de terrain (FG) de la technique d'automatisation, avec un premier système d'exploitation (OS1), comprenant :
- un programme d'application (AW) exécutable sur le premier système d'exploitation (OS1) de l'unité de commande (BE) ; et
- un algorithme d'émulation (EA), lequel est conçu de telle sorte à exécuter, sur le programme d'application (AW) de l'unité de commande (BE), un logiciel d'application (AP) exécutable sur un deuxième système d'exploitation (OS2), lequel logiciel comporte au moins un protocole de communication pour le codage/décodage des télégrammes transmis vers/depuis l'appareil de terrain (FG), et lequel logiciel est conçu de telle sorte à commander l'appareil de terrain (FG), notamment pour lire, afficher et modifier les paramètres de l'appareil de terrain (FG) et/ou pour lire et afficher les valeurs mesurées de l'appareil de terrain (FG).

2. Unité de commande (BE) selon la revendication 1, pour laquelle l'unité de commande (BE) présente un pilote de communication générique (KT) exécutable dans le programme d'application (AW), lequel pilote est conçu de telle sorte à exécuter l'algorithme d'émulation (EA).

3. Unité de commande (BE) selon la revendication 1, pour laquelle le programme d'application (AW) est conçu de telle sorte à exécuter l'algorithme d'émulation (EA).

4. Unité de commande (BE) selon la revendication 2, pour laquelle il s'agit, concernant le programme d'application (AW), d'une application FDT.

5. Unité de commande (BE) selon la revendication 4, pour laquelle il s'agit, concernant le pilote de communication générique (KT), d'un pilote d'appareil DTM.

6. Unité de commande (BE) selon la revendication 2, pour laquelle il s'agit, concernant le programme d'application (AW), d'un hôte FDI.

7. Unité de commande (BE) selon la revendication 6, pour laquelle il s'agit, concernant le pilote de communication générique (KT), d'un package FDI.

8. Unité de commande (BE) selon au moins l'une des revendications précédentes, pour laquelle l'unité de commande (BE) est une unité d'ordinateur, notamment un ordinateur portable, une station de travail PC ou une tablette.

9. Unité de commande (BE) selon au moins l'une des revendications précédentes, pour laquelle l'unité de commande (BE) comprend une interface de communication (IF) pour la liaison de l'unité de commande (BE) avec un réseau de communication câblé ou sans fil, laquelle interface est accessible pour le logiciel d'application.

10. Unité de commande (BE) selon au moins l'une des revendications précédentes, pour laquelle il s'agit, concernant le premier système d'exploitation (OS1), de Microsoft Windows.

11. Unité de commande (BE) selon au moins l'une des revendications précédentes, pour laquelle il s'agit, concernant le deuxième système d'exploitation (OS2), d'un système d'exploitation d'un terminal mobile, notamment d'iOS ou d'Android.
